(19) Europäisches Patentamt
European Patent Office
Office européen des brevets

(11) **EP 4 498 621 A1**

(12) **EUROPEAN PATENT APPLICATION**
published in accordance with Art. 153(4) EPC

(43) Date of publication:
**29.01.2025 Bulletin 2025/05**

(21) Application number: **23795183.5**

(22) Date of filing: **20.04.2023**

(51) International Patent Classification (IPC):
*H04L 1/00* (2006.01)

(52) Cooperative Patent Classification (CPC):
**H04B 14/02; H04L 1/00**

(86) International application number:
**PCT/CN2023/089502**

(87) International publication number:
**WO 2023/207750 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.04.2022 CN 202210454781**

(71) Applicant: **Huawei Technologies Co., Ltd.
Shenzhen, Guangdong 518129 (CN)**

(72) Inventors:
• **CHEN, Hua
Shenzhen, Guangdong 518129 (CN)**

• **WANG, Peng
Shenzhen, Guangdong 518129 (CN)**
• **LI, Ying
Shenzhen, Guangdong 518129 (CN)**
• **YANG, Yumeng
Shenzhen, Guangdong 518129 (CN)**
• **XU, Xiangen
Shenzhen, Guangdong 518129 (CN)**
• **GAO, Feng
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **SIGNAL PROCESSING METHOD AND APPARATUS**

(57)     Embodiments of this application disclose a signal processing method. The method may be applied to a transmit end. The transmit end may obtain an LDPC encoded signal based on a to-be-sent signal; then, modulate the LDPC encoded signal into a PAM8 symbol; and further, send the PAM8 symbol to a receive end through a network cable. It can be learned that, in embodiments of this application, in comparison with modulating an LDPC encoded signal based on PAM16, modulating the LDPC encoded signal based on PAM8 increases a spacing between codewords of a symbol obtained through modulation, so that fault tolerance performance of the modulated symbol is better, the modulated symbol can be stably transmitted over a longer distance, and correspondingly, data can be stably transmitted through the network cable over a longer distance. When the network cable is a Category 5 enhanced cable, according to solutions in embodiments of this application, even if the Category 5 enhanced cable is bundled for 100 meters, stable transmission at a 5G rate can be implemented.

FIG. 2

## Description

This application claims priority to Chinese Patent Application No. 202210454781.6, filed with the China National Intellectual Property Administration on April 24, 2022 and entitled "SIGNAL PROCESSING METHOD AND APPARATUS", which is incorporated herein by reference in its entirety.

## TECHNICAL FIELD

This application relates to the communication field, and in particular, to a signal processing method and apparatus.

## BACKGROUND

The institute of electrical and electronics engineers (institute of electrical and electronics engineers, IEEE) 802.3 defines a plurality of Ethernet physical layer specifications for twisted pair-based transmission. For example, 802.3bz defines 2.5G/5G Ethernet physical layer specifications.

A large quantity of network cables such as Category 5 enhanced (cat5E) cables are deployed on a live network. The Category 5 enhanced cables include a Category 5 enhanced unshielded twisted pair (unshielded twisted pair, UTP) and a Category 5 enhanced shielded twisted pair. Currently, when data is transmitted through a network cable, the data can be stably transmitted over a short distance. For example, when the Category 5 enhanced cable is bundled for 100 meters, an alien crosstalk (alien crosstalk) level is significantly increased, and a signal transmission quality is significantly reduced, and consequently stable transmission at a 5G rate cannot be implemented.

Therefore, a solution is urgently needed to resolve the foregoing problem.

## SUMMARY

Embodiments of this application provide a signal processing method and apparatus, to increase a distance over which data is stably transmitted through a network cable.

According to a first aspect, an embodiment of this application provides a signal processing method. The method may be applied to a transmit end. In an example, the transmit end may obtain a low-density parity-check (low-density parity-check, LDPC) encoded signal based on a to-be-sent signal; then, modulate the LDPC encoded signal into an 8 pulse amplitude modulation (8 pulse amplitude modulation, PAM8) symbol; and further, send the PAM8 symbol to a receive end through a network cable. It can be learned that, in this embodiment of this application, in comparison with modulating the LDPC encoded signal based on 16 pulse amplitude modulation (16 pulse amplitude modulation, PAM16), modulating the LDPC encoded signal based on PAM8 increases a spacing between codewords of a symbol obtained through modulation, so that fault tolerance performance of the modulated symbol is better, the modulated symbol can be stably transmitted over a longer distance, and correspondingly, data can be stably transmitted through the network cable over a longer distance.

In a possible implementation, the network cable may be a Category 5 enhanced cable, for example, a Category 5 enhanced unshielded network cable. In this case, according to a solution in this embodiment of this application, even if the Category 5 enhanced cable is bundled for 100 meters, stable transmission at a 5G rate can be implemented.

In a possible implementation, to reduce complexity of obtaining the LDPC encoded signal and correspondingly reduce complexity of implementing the signal processing method provided in this embodiment of this application, the LDPC encoded signal may be obtained based on a conventional LDPC encoding specification. The conventional LDPC encoding specification mentioned herein may be an LDPC encoding specification mentioned in IEEE 802.3bz. In this case, the LDPC encoded signal mentioned herein may include 2048 bits. The LDPC encoded signal of 2048 bits is obtained by performing LDPC encoding on data of 1723 bits. The data of 1723 bits includes 1 synchronization bit, 25 blocks, and 97 bits whose values are 0, and one of the blocks includes 65 bits. The 25 blocks mentioned herein may be used to carry the to-be-sent signal.

In a possible implementation, when the LDPC encoded signal is the LDPC encoded signal obtained based on the conventional LDPC encoding specification, the transmit end may remove the 97 bits whose values are 0 from the LDPC encoded signal, to obtain 1951 bits; then remove M bits from the 1951 bits, to obtain 1951-M bits, where the 1951-M bits are used to carry the to-be-sent signal; and modulate the 1951-M bits into the PAM8 symbol.

In a possible implementation, in a specific implementation of removing the M bits from the 1951 bits, 1 bit may be removed at an interval of N bits starting from a $0^{th}$ bit in the 1951 bits, until the M bits are removed. In this manner, the 1951-M bits used to carry the to-be-sent data can be obtained, and LDPC decoding precision may be not affected.

In a possible implementation, to reduce a calculation amount of modulating the LDPC encoded signal into the PAM8 symbol, a baud rate of the to-be-sent signal may be increased from 400 MBd (M) in the conventional technology to 500 M. In this case, a quantity of symbols that need to be sent through each of four network cables is 160, a total quantity of symbols that need to be sent through the four network cables is 640, and correspondingly, a quantity of bits used to carry the to-be-sent signal is 1920. In this case, a value of M is 31.

In a possible implementation, a value of N may be greater than or equal to 1 and less than or equal to 1951/31. In an example, the LDPC decoding precision is verified, and it is found that when the value of N is 32, the LDPC decoding precision is good. Therefore, in an example, it is recommended that the value of N be 32.

According to a second aspect, an embodiment of this application provides a signal processing method. The method may be applied to a receive end. The receive end may receive a PAM8 symbol through a network cable; demodulate the PAM8 symbol to obtain an LDPC encoded signal; and further decode the LDPC encoded signal to obtain a decoded signal. The decoded signal may be considered as a to-be-sent signal sent by a transmit end. It can be learned that, in this embodiment of this application, the receive end receives the PAM8 symbol. Compared with a PAM16 symbol, a spacing between codewords of the PAM8 symbol is larger. Therefore, fault tolerance performance of the PAM8 symbol is better, and the PAM8 symbol can be stably transmitted over a longer distance.

In a possible implementation, the network cable may be a Category 5 enhanced cable, for example, a Category 5 enhanced unshielded twisted pair. In this case, according to a solution in this embodiment of this application, even if the Category 5 enhanced cable is bundled for 100 meters, stable transmission at a 5G rate can be implemented.

In a possible implementation, in a specific implementation of demodulating the PAM8 symbol, the receive end may first convert the PAM8 symbol into a signal including 1951-M bits; then, insert M bits into the 1951-M bits to obtain 1951 bits, where values of the M bits are all 0; and add 97 bits whose values are 0 to the 1951 bits, to obtain an LDPC encoded signal including 2048 bits. A process in which the receive end inserts the M bits into the 1951-M bits is an inverse process in which the transmit end deletes the M bits from the 1951 bits. A process in which the receive end adds the 97 bits whose values are 0 to the 1951 bits is an inverse process in which the transmit end deletes the 97 bits based on the 2048 bits, to obtain the 1951 bits.

In a possible implementation, when the LDPC encoded signal is decoded, to obtain a more accurate decoding result, log-likelihood ratios (log-likelihood ratios, LLRs) of the LDPC encoded signal may be decoded, to obtain the decoded signal. Specifically, the receive end may obtain the log-likelihood ratio LLR of the LDPC encoded signal based on the LDPC encoded signal, where each bit in the LDPC encoded signal corresponds to one LLR; and then decode the LLRs of the LDPC encoded signal to obtain the decoded signal.

According to a third aspect, an embodiment of this application provides a signal processing apparatus, used in a transmit end. The apparatus includes: a processing unit, configured to: obtain a low-density parity-check LDPC encoded signal based on a to-be-sent signal, and modulate the LDPC encoded signal into an 8 pulse amplitude modulation PAM8 symbol; and a sending unit, configured to send the PAM8 symbol to a receive end through a network cable.

In a possible implementation, the LDPC encoded signal includes 2048 bits, the LDPC encoded signal is obtained by performing LDPC encoding on data of 1723 bits, the 1723 bits include 1 synchronization bit, 25 blocks, and 97 bits whose values are 0, and one of the blocks includes 65 bits.

In a possible implementation, the modulating the LDPC encoded signal into an 8 pulse amplitude modulation PAM8 symbol includes: removing the 97 bits whose values are 0 from the LDPC encoded signal to obtain 1951 bits; removing M bits from the 1951 bits, to obtain 1951-M bits, where the 1951-M bits are used to carry the to-be-sent signal; and modulating the 1951-M bits into the PAM8 symbol.

In a possible implementation, the removing M bits from the 1951 bits includes: removing 1 bit at an interval of N bits starting from a $0^{th}$ bit in the 1951 bits, until the M bits are removed.

In a possible implementation, a baud rate of the to-be-sent signal is 500 MBd M, and a value of M is 31.

In a possible implementation, a value of N is 32.

In a possible implementation, the network cable is a Category 5 enhanced unshielded twisted pair.

According to a fourth aspect, an embodiment of this application provides a signal processing apparatus, used in a receive end, where the apparatus includes: a receiving unit, configured to receive an 8 pulse amplitude modulation PAM8 symbol through a network cable; and a processing unit, configured to: demodulate the PAM8 symbol to obtain a low-density parity-check LDPC encoded signal; and decode the LDPC encoded signal to obtain a decoded signal.

In a possible implementation, the demodulating the PAM8 symbol to obtain a low-density parity-check LDPC encoded signal includes: converting the PAM8 symbol into a signal including 1951-M bits; inserting M bits into the 1951-M bits to obtain 1951 bits, where values of the M bits are all 0; and adding 97 bits whose values are 0 to the 1951 bits, to obtain an LDPC encoded signal including 2048 bits.

In a possible implementation, the decoding the LDPC encoded signal to obtain a decoded signal includes: obtaining a log-likelihood ratio LLR of the LDPC encoded signal based on the LDPC encoded signal, where each bit in the LDPC encoded signal corresponds to one LLR; and decoding the LLRs of the LDPC encoded signal to obtain the decoded signal.

In a possible implementation, the network cable is a Category 5 enhanced unshielded twisted pair.

According to a fifth aspect, an embodiment of this application provides a device. The device includes a processor and a memory. The memory is configured to store instructions or a computer program. The processor is configured to execute the instructions or the computer program in the memory, to perform the method according to any one of the first aspect or the method according to any one of the second aspect.

According to a sixth aspect, an embodiment of this application provides a computer-readable storage medium, including instructions or a computer program. When the instructions or the computer program is run on a computer, the computer is enabled to perform the method according to any one of the first aspect or the method according to any one of the second aspect.

According to a seventh aspect, an embodiment of this application provides a computer program product including instructions or a computer program. When the computer program product runs on a computer, the computer is enabled to perform the method according to any one of the first aspect or the method according to any one of the second aspect.

According to an eighth aspect, an embodiment of this application provides a system. The system includes a transmit end that performs the method according to any one of the first aspect and a receive end that performs the method according to any one of the second aspect.

**BRIEF DESCRIPTION OF DRAWINGS**

To describe the technical solutions in embodiments of this application or the conventional technology more clearly, the following briefly describes the accompanying drawings for describing embodiments or the conventional technology. It is clear that the accompanying drawings in the following descriptions show only some embodiments recorded in this application, and persons of ordinary skill in the art may still derive other accompanying drawings from these accompanying drawings without creative efforts.

FIG. 1 is a diagram of a signal processing method according to an embodiment of this application;
FIG. 2 is a signaling exchange diagram of a signal processing method according to an embodiment of this application;
FIG. 3 is a diagram of a signal processing method according to an embodiment of this application;
FIG. 4 is a diagram of a structure of a signal processing apparatus according to an embodiment of this application;
FIG. 5 is a diagram of a structure of a signal processing apparatus according to an embodiment of this application; and
FIG. 6 is a diagram of a structure of a device according to an embodiment of this application.

**DESCRIPTION OF EMBODIMENTS**

Embodiments of this application provide a signal processing method and apparatus, to increase a distance over which data is stably transmitted through a network cable.

For ease of understanding, a possible application scenario of embodiments of this application is first described.

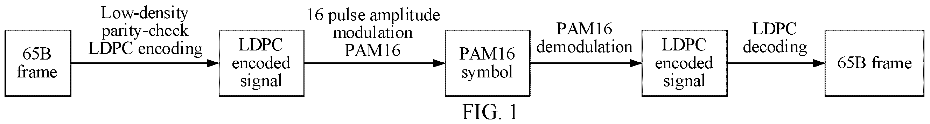

Currently, 802.3bz defines 2.5G/5G Ethernet physical layer specifications. Specifically, a baud rate of a sent signal is 400 M, forward error correction (forward error correction, FEC) is implemented through LDPC encoding and decoding, and a PAM16 amplitude modulation technology is used, to implement transmission at a rate of 2.5G/5G. FIG. 1 is a diagram of a signal processing method according to an embodiment of this application.

As shown in FIG. 1, a 2.5G/5G Ethernet physical layer specification defined in 802.3bz is used. A transmit end first performs LDPC encoding on a 65-bit (bit, B) frame that is used as a to-be-sent signal, to obtain an LDPC encoded signal, then modulates the LDPC encoded signal into a PAM16 symbol, and sends the PAM16 symbol to a receive end. The receive end demodulates the received PAM16 symbol to obtain the LDPC encoded signal, and decodes the LDPC encoded signal to obtain a decoded signal. The decoded signal is the 65B frame sent by the transmit end. The 65B frame may include a plurality of blocks (blocks). Each block includes 65 bits.

However, based on this solution, data can be stably transmitted through a network cable over a short distance. For example, when a plurality of cables of a Category 5 enhanced unshielded twisted pair are bundled, if a bundling length reaches 100 m, an alien crosstalk (alien crosstalk) level is significantly increased, and signal transmission quality is significantly reduced, and consequently stable transmission at a 5G rate cannot be implemented.

To resolve this problem, embodiments of this application provide a signal processing method and apparatus. The following describes, with reference to the accompanying drawings, the signal processing method and apparatus provided in embodiments of this application.

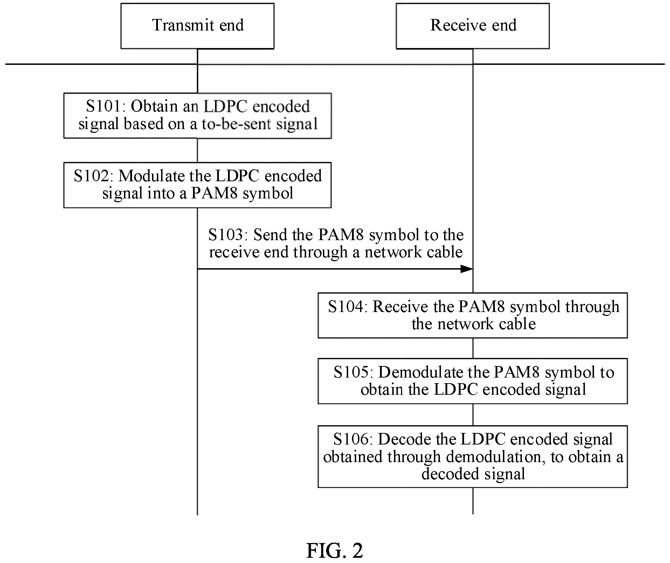

FIG. 2 is a signaling exchange diagram of a signal processing method according to an embodiment of this application. The signal processing method shown in FIG. 2 may include, for example, the following S101 to S106.

A transmit end and a receive end mentioned in embodiments of this application are connected through a network cable. The transmit end is not specifically limited in embodiments of this application. The transmit end may be a network device or user equipment. The user equipment mentioned herein may be, for example, a personal computer of a user or a server. Correspondingly, the receive end may be a network device or user equipment.

S101: The transmit end obtains an LDPC encoded signal based on a to-be-sent signal.

In an example, the to-be-sent signal may include a plurality of blocks, and one block includes 65 bits.

In an example, in a specific implementation of S101, LDPC encoding may be performed on the to-be-sent signal, to obtain the LDPC encoded signal.

In an example, LDPC encoding may be performed on the to-be-sent signal based on a user-defined LDPC encoding specification, to obtain the LDPC encoded signal.

In another example, the LDPC encoded signal may be obtained based on a conventional LDPC encoding specification. The conventional LDPC encoding specification mentioned herein may be an LDPC encoding specification mentioned in IEEE 802.3bz. In this case, the LDPC encoded signal mentioned herein may include 2048 bits. The LDPC encoded signal of 2048 bits is obtained by performing LDPC encoding on data of 1723 bits. The data of 1723 bits includes 1 synchronization bit, 25 blocks, and 97 bits whose values are 0, and one of the blocks includes 65 bits. The 25 blocks mentioned herein may be used to carry the to-be-sent signal. When the LDPC encoded signal is obtained based on the conventional LDPC encoding specification, a new LDPC encoding specification does not need to be customized. This reduces complexity of implementing a solution in this embodiment of this application.

S102: The transmit end modulates the LDPC encoded signal into a PAM8 symbol.

In this embodiment of this application, considering that for PAM16, a spacing between codewords is small, a small error affects a modulation result, and consequently, data can be stably transmitted over a short distance. Therefore, in this embodiment of this application, PAM8 instead of the PAM16 is used. In comparison with a PAM16 symbol, the PAM8 symbol has a larger spacing between codewords, and therefore, has better fault tolerance performance. In other words, a distance over which the PAM8 symbol can be stably transmitted is longer than a distance over which the PAM16 symbol can be stably transmitted. In other words, after the transmit end obtains the LDPC encoded signal, when modulating the LDPC encoded signal, the transmit end no longer modulates the LDPC encoded signal into the PAM16 symbol, but modulates the LDPC encoded signal into the PAM8 symbol.

In some embodiments, after the LDPC encoded signal is obtained, the LDPC encoded signal may be directly modulated based on an encoding format corresponding to the PAM8 symbol, to obtain the PAM8 symbol.

In some other embodiments, if the LDPC encoding is obtained based on the conventional LDPC encoding specification, because pulse amplitude modulation corresponding to the conventional LDPC encoding specification is the PAM16, in a specific implementation of S102, the LDPC encoded signal may be first processed to obtain a signal used to carry the to-be-sent signal, and then the signal used to carry the to-be-sent signal is further modulated into the PAM8 symbol. In this case, in an example, S102 may include the following step A1 to step A3.

A1: Remove the 97 bits whose values are 0 from the LDPC encoded signal, to obtain 1951 bits.

Based on a conventional LDPC encoding mechanism, the last 97 bits in the foregoing 1723 bits correspond to a 1626th bit to a 1722nd bit in the 2048 bits. Therefore, in a specific implementation of step A1, the 1626th bit to the 1722nd bit in the 2048 bits may be removed to obtain the 1951 bits.

A2: Remove M bits from the 1951 bits, to obtain 1951-M bits, where the 1951-M bits are used to carry the to-be-sent signal.

In this embodiment of this application, a quantity of the bits used to carry the to-be-sent signal is less than 1951. In this case, some bits in the 1951 bits may be further removed, to obtain several bits used to carry the to-be-sent signal. In an example, the to-be-sent signal may be carried by using the 1951-M bits. In this case, the M bits in the 1951 bits may be further removed to obtain the 1951-M bits.

In an example, in a specific implementation of removing the M bits from the 1951 bits, an $i$th bit to an $(i+M-1)$th bit may be removed from the 1951 bits, in other words, M consecutive bits are removed from the 1951 bits. In another example, considering that removal of the M bits from the 1951 bits affects LDPC decoding precision, in the another example, in a specific implementation of removing the M bits from the 1951 bits, 1 bit may be removed at an interval of N bits starting from a $0$th bit in the 1951 bits, until the M bits are removed. In this manner, the 1951-M bits used to carry the to-be-sent data can be obtained, and the LDPC decoding precision may be not affected.

For a value of M, it should be noted that the value of M may be determined based on a baud rate of the to-be-sent signal. Details are as follows.

In current IEEE 802.3bz-2016, the baud rate of the to-be-sent signal is 400 M. Based on an LDPC encoding specification and a PAM16 modulation scheme that are stipulated in IEEE 802.3bz, 128 symbols are transmitted on each of four network cables of an Ethernet, and 512 symbols are transmitted on the four network cables. It is assumed that the baud rate of the to-be-sent signal in this embodiment of this application is P. After the modulation scheme is changed from the PAM16 to the PAM8, theoretically, a quantity of symbols sent by each network cable is $\dfrac{P*128}{400}$. Correspondingly, a quantity of symbols sent by the four network cables is $\dfrac{P*128}{100} = \dfrac{P*32}{25}$, and correspondingly, a quantity of bits used to carry the to-be-sent signal is $\dfrac{P*32}{25}*3$.

In an example, to reduce a calculation amount of modulating the LDPC encoded signal into the PAM8 symbol, P may be a multiple of 25. In an example, P may be increased from 400 M in the conventional technology to 500 M. In this case:

A quantity of symbols that need to be sent through each network cable is 160, a total quantity of symbols that need to be sent through the four network cables is 640, and correspondingly, a quantity of bits used to carry the to-be-sent signal is 1920. In this case, the value of M is 31.

A value of N is not specifically limited in this embodiment of this application. The value of N may be greater than or equal to 1 and less than or equal to 1951/31. In an example, the LDPC decoding precision is verified, and it is found that when the value of N is 32, the LDPC decoding precision is good. Therefore, in an example, it is recommended that the value of N be 32. In other words, in a specific implementation of removing the M bits from the 1951 bits, 1 bit may be removed at an interval of 32 bits starting from the $0^{th}$ bit in the 1951 bits, until 31 bits are removed. For example, a $32^{nd}$ bit, a $64^{th}$ bit, a $96^{th}$ bit, and the like may be removed from the 1951 bits, and the rest may be deduced by analogy, until 31 bits are removed.

A3: Modulate the 1951-M bits into the PAM8 symbol.

After the 1951-M bits are obtained, the 1951-M bits may be modulated into the PAM8 symbol. In an example, the 1951-M bits may be modulated into the PAM8 symbol based on a mapping relationship between the PAM8 symbol and binary data corresponding to the PAM8 symbol. The mapping relationship may be shown in the following Table 1.

**Table 1**

| Binary data b2b1b0 | PAM8 symbol |
|---|---|
| 000 | -7 |
| 001 | -5 |
| 010 | -1 |
| 011 | -3 |
| 100 | 7 |
| 101 | 5 |
| 110 | 1 |
| 111 | 3 |

In the mapping relationship shown in the foregoing table, Gray encoding is used for binary encoding corresponding to the PAM8 symbol, to improve the fault tolerance performance of the PAM8 symbol.

S103: The transmit end sends the PAM8 symbol to the receive end through the network cable.

S104: The receive end receives the PAM8 symbol through the network cable.

After obtaining the PAM8 symbol, the transmit end may send the PAM8 symbol to the receive end through the network cable. Correspondingly, the receive end may receive the PAM8 symbol through the network cable.

The network cable is not specifically limited in this embodiment of this application. In an example, the network cable may be a Category 5 enhanced cable, for example, may be an unshielded twisted pair in Category 5 enhanced cables. In this case, based on the solution in this embodiment of this application, even if the Category 5 enhanced cable is bundled for 100 meters, stable transmission at a 5G rate can be implemented. In another example, the network cable may be a Category 6 enhanced cable, to increase a distance over which data can be stably transmitted through the Category 6 enhanced cable.

After receiving the PAM8 symbol, the receive end may perform S105 and S106, to obtain the to-be-sent signal sent by the transmit end to the receive end.

S105: The receive end demodulates the PAM8 symbol to obtain the LDPC encoded signal.

In an example, in a specific implementation of S105, the PAM8 symbol may be demodulated based on the foregoing mentioned mapping relationship between the PAM8 symbol and the binary data corresponding to the PAM8 symbol, to obtain the binary data corresponding to the PAM8 symbol. The binary data is the LDPC encoded signal.

In another example, if the PAM8 symbol is obtained by the transmit end by modulating the LDPC encoded signal obtained based on the conventional LDPC encoding specification, in a specific implementation, S105 may include the following steps B1 to B3.

B1: Convert the PAM8 symbol into a signal including 1951-M bits.

Step B1 is an inverse operation of step A3. In an example, in a specific implementation of step B1, the PAM8 symbol may be converted into the signal including the 1951-M bits based on the foregoing mapping relationship between the PAM8 symbol and the binary data corresponding to the PAM8 symbol.

B2: Insert the M bits into the 1951-M bits to obtain 1951 bits, where values of the M bits are all 0.

Step B2 is an inverse operation of step A2, and a manner of inserting the M bits into the 1951-M bits corresponds to a manner of removing the M bits from the 1951 bits. In an example, starting from a $0^{th}$ bit in the 1951-M bits, 1 bit whose value is 0 may be inserted at intervals of N bits, until the M bits whose values are 0 are inserted, to obtain the 1951 bits.

B3: Add the 97 bits whose values are 0 to the 1951 bits, to obtain the LDPC encoded signal including the 2048 bits.

Step B3 is an inverse operation of step A1. In an example, the 97 bits whose values are 0 may be inserted after a $1625^{th}$ bit in the 1951 bits, to obtain the 2048 bits. The newly added 97 bits whose values are 0 correspond to the $1626^{th}$ bit to the $1722^{nd}$ bit in the 2048 bits.

S106: The receive end decodes the LDPC encoded signal obtained through demodulation, to obtain a decoded signal.

After demodulating the PAM8 symbol to obtain the LDPC encoded signal, the receive end may decode the LDPC encoded signal to obtain the decoded signal.

When the LDPC encoded signal is decoded, to obtain a more accurate decoding result, LLRs of the LDPC encoded signal may be decoded, to obtain the decoded signal. Each bit in the LDPC encoded signal corresponds to one LLR.

It should be noted that the LLR is as follows.

An example is as follows.

It is assumed that a value range of the LLR is (-Q, +Q). When a value of a bit is 1, an LLR of the bit is a negative value. When a value of a bit is 0, an LLR of the bit is a positive value. For any one of the 2048 bits, an LLR of the bit is determined in the following manner:

If a value of the bit is 0, the LLR of the bit is Q.

If a value of the bit is 1, the LLR of the bit is -Q.

If a probability that the bit is 0 is greater than a probability that the bit is 1, an LLR value of the bit is between 0 and Q, and a specific value is determined by using an LLR algorithm.

If a probability that the bit is 0 is less than a probability that the bit is 1, an LLR value of the bit is between -Q and 0, and a specific value is determined by using an LLR algorithm.

If a probability that the bit is 0 is equal to a probability that the bit is 1, an LLR value of the bit is 0.

Another example is as follows.

It is assumed that a value range of the LLR is (-Q, +Q). When a value of a bit is 1, an LLR of the bit is a positive value. When a value of a bit is 0, an LLR of the bit is a negative value. For any one of the 2048 bits, an LLR of the bit is determined in the following manner:

If a value of the bit is 0, an LLR of the bit is -Q.

If a value of the bit is 1, an LLR of the bit is Q.

If a probability that the bit is 0 is greater than a probability that the bit is 1, an LLR value of the bit is between -Q and 0, and a specific value is determined by using an LLR algorithm.

If a probability that the bit is 0 is less than a probability that the bit is 1, the LLR value of the bit is between 0 and Q, and a specific value is determined by using an LLR algorithm.

If a probability that the bit is 0 is equal to a probability that the bit is 1, an LLR value of the bit is 0.

A value of a bit may be 0 or 1. It should be noted that: In a process of transmitting the PAM symbol through the network cable, the PAM symbol may be affected by noise. Therefore, a value of the PAM8 symbol received by the receive end may be a value not included in Table 1. For example, if the value of the PAM8 symbol received by the receive end is -5.5, the binary data corresponding to the PAM8 symbol may be 000 or 001 because the value of the PAM8 symbol is between -5 and -7. In this case, values of first two bits of the binary data corresponding to the PAM8 symbol are 00, and a value of a $3^{rd}$ bit may be 1 or 0.

It can be learned from the foregoing descriptions that, in the solution of this embodiment of this application, in comparison with modulating the LDPC encoded signal based on the PAM16, modulating the LDPC encoded signal based on the PAM8 increases a spacing between codewords of a symbol obtained through modulation, so that fault tolerance performance of the modulated symbol is better, and the modulated symbol can be stably transmitted over a longer distance, and correspondingly, data can be stably transmitted through the network cable over a longer distance.

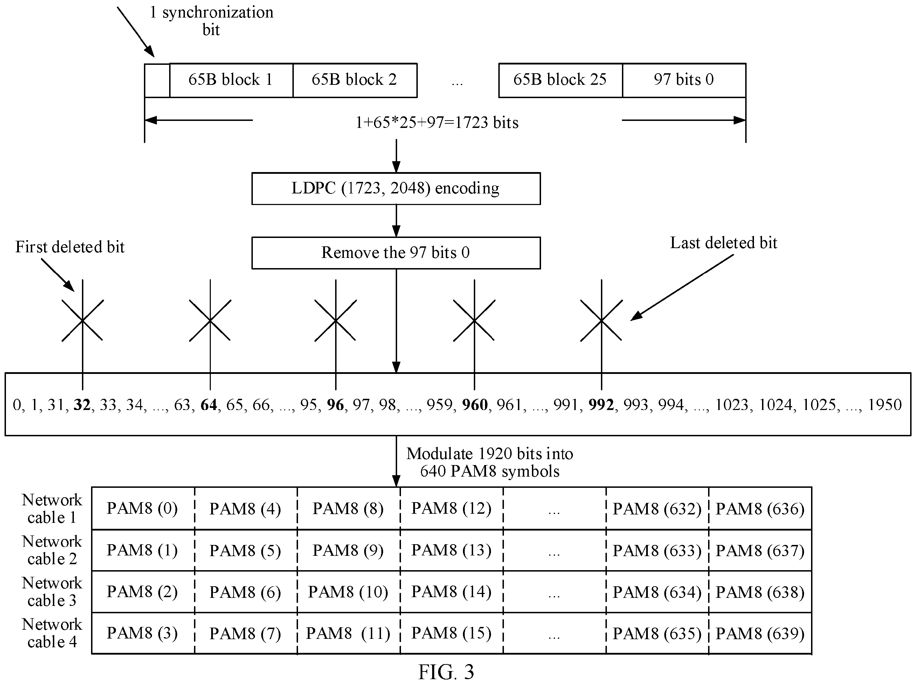

With reference to a scenario shown in FIG. 3, the signal processing method provided in this embodiment of this application is briefly described herein. In the scenario shown in FIG. 3, a baud rate of a to-be-sent signal is adjusted to 500 M, and a conventional LDPC encoding and decoding manner is still used.

In the scenario shown in FIG. 3, a transmit end may perform LDPC encoding based on 1723 bits including 1 synchronization bit, 25 blocks, and 97 bits whose values are 0, to obtain an LDPC encoded signal of 2048 bits. Then, the 97 bits whose values are 0 are removed from the 2048 bits, to obtain 1951 bits, and 1 bit is deleted at an interval of 32 bits starting from a $0^{th}$ bit in the 1951 bits, until 31 bits are deleted, to obtain 1920 bits. As shown in FIG. 3, a $32^{nd}$ bit, a $64^{th}$ bit, a $96^{th}$ bit, ..., a $960^{th}$ bit, and a $992^{nd}$ bit in the 1951 bits may be removed. Further, the 1920 bits are modulated into 640 PAM8 symbols, and the 640 PAM8 symbols are sent to a receive end through four network cables.

In this case, after receiving the PAM8 symbol, the receive end may first convert the PAM8 symbol into a signal including the 1920 bits. Then, 31 bits whose values are 0 are inserted into the 1920 bits, to obtain the 1951 bits. The receive end may insert 1 bit whose value is 0 at an interval of 32 bits starting from the $0^{th}$ bit in the 1920 bits, until 31 bits whose values are 0 are inserted. After obtaining the 1951 bits, the receive end may insert the 97 bits whose values are 0 after a $1625^{th}$ bit in the 1951 bits, to obtain the 2048 bits. The newly added 97 bits whose values are 0 correspond to a $1626^{th}$ bit to a $1722^{nd}$ bit in the 2048 bits. In this way, the receive end obtains the LDPC encoded signal including the 2048 bits. Further, the receive end may decode LLRs of the LDPC encoded signal including the 2048 bits, to obtain a decoded signal.

Based on the signal processing method provided in the foregoing embodiments, an embodiment of this application further provides a corresponding signal processing apparatus. The following describes the apparatus with reference to the accompanying drawings.

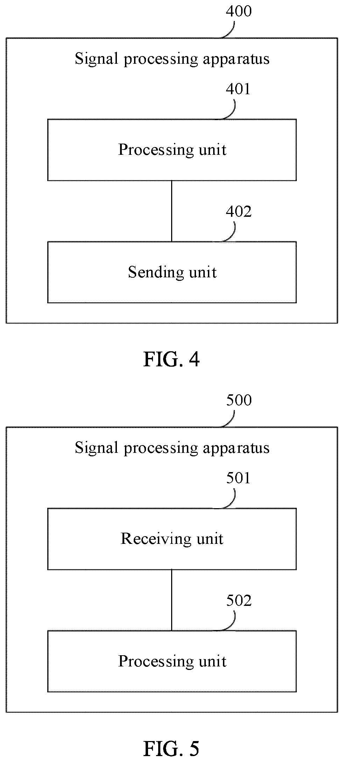

FIG. 4 is a diagram of a structure of a signal processing apparatus according to an embodiment of this application. The signal processing apparatus 400 shown in FIG. 4 may be used in a transmit end, and is configured to perform the steps that are performed by the transmit end and that are mentioned in the foregoing method embodiment.

In an example, the signal processing apparatus 400 may include a processing unit 401 and a sending unit 402.

The processing unit 401 is configured to obtain a low-density parity-check LDPC encoded signal based on a to-be-sent signal, and modulate the LDPC encoded signal into an 8 pulse amplitude modulation PAM8 symbol.

The sending unit 402 is configured to send the PAM8 symbol to a receive end through a network cable.

In a possible implementation, the LDPC encoded signal includes 2048 bits, the LDPC encoded signal is obtained by performing LDPC encoding on data of 1723 bits, the 1723 bits include 1 synchronization bit, 25 blocks, and 97 bits whose values are 0, and one of the blocks includes 65 bits.

In a possible implementation, the modulating the LDPC encoded signal into an 8 pulse amplitude modulation PAM8 symbol includes: removing the 97 bits whose values are 0 from the LDPC encoded signal, to obtain 1951 bits; removing M bits from the 1951 bits, to obtain 1951-M bits, where the 1951-M bits are used to carry the to-be-sent signal; and modulating the 1951-M bits into the PAM8 symbol.

In a possible implementation, the removing M bits from the 1951 bits includes: removing 1 bit at an interval of N bits starting from a $0^{th}$ bit in the 1951 bits, until the M bits are removed.

In a possible implementation, a baud rate of the to-be-sent signal is 500 MBd M, and a value of M is 31.

In a possible implementation, a value of N is 32.

In a possible implementation, the network cable is a Category 5 enhanced unshielded twisted pair.

The apparatus 400 is an apparatus corresponding to the method that is performed by the transmit end and that is provided in the foregoing method embodiment, and a specific implementation of each unit of the apparatus 400 has a same concept as that in the foregoing method embodiment. Therefore, for the specific implementation of each unit of the apparatus 400, refer to the descriptions of the steps performed by the transmit end in the foregoing method embodiment. Details are not described herein again.

FIG. 5 is a diagram of a structure of a signal processing apparatus according to an embodiment of this application. The signal processing apparatus 500 shown in FIG. 5 may be used in a receive end, and is configured to perform the steps that are performed by the receive end and that are mentioned in the foregoing method embodiment.

In an example, the apparatus 500 may include a receiving unit 501 and a processing unit 502.

The receiving unit 501 is configured to receive an 8 pulse amplitude modulation PAM8 symbol through a network cable.

The processing unit 502 is configured to: demodulate the PAM8 symbol to obtain a low-density parity-check LDPC encoded signal; and decode the LDPC encoded signal to obtain a decoded signal.

In a possible implementation, the demodulating the PAM8 symbol to obtain a low-density parity-check LDPC encoded signal includes: converting the PAM8 symbol into a signal including 1951-M bits; inserting M bits into the 1951-M bits to obtain 1951 bits, where values of the M bits are all 0; and adding 97 bits whose values are 0 to the 1951 bits, to obtain an LDPC encoded signal including 2048 bits.

In a possible implementation, the decoding the LDPC encoded signal to obtain a decoded signal includes: obtaining a log-likelihood ratio LLR of the LDPC encoded signal based on the LDPC encoded signal, where each bit in the LDPC encoded signal corresponds to one LLR; and decoding the LLRs of the LDPC encoded signal to obtain the decoded signal.

In a possible implementation, the network cable is a Category 5 enhanced unshielded twisted pair.

The apparatus 500 is an apparatus corresponding to the method that is performed by the receive end and that is provided in the foregoing method embodiment, and a specific implementation of each unit of the apparatus 500 has a same concept as that in the foregoing method embodiment. Therefore, for the specific implementation of each unit of the apparatus 500, refer to the descriptions of the steps performed by the receive end in the foregoing method embodiment. Details are not described herein again.

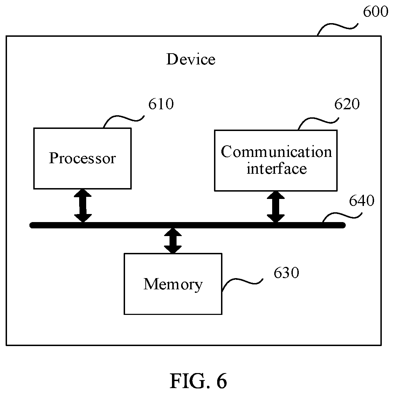

It should be noted that hardware structures of the signal processing apparatus 400 and the signal processing apparatus 500 mentioned above may be a structure shown in FIG. 6. FIG. 6 is a diagram of a structure of a device according to an embodiment of this application.

Refer to FIG. 6. The device 600 includes a processor 610, a communication interface 620, and a memory 630. The device 600 may include one or more processors 610. In FIG. 6, one processor is used as an example. In this embodiment of this application, the processor 610, the communication interface 620, and the memory 630 may be connected by using a bus system or in another manner. In FIG. 6, for example, a bus system 640 is used for connection.

The processor 610 may be a central processing unit (central processing unit, CPU), a network processor (network processor, NP), or a combination of a CPU and an NP. The processor 610 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL), or any combination thereof.

The memory 630 may include a volatile memory (English: volatile memory), for example, a random access memory (random access memory, RAM). The memory 630 may also include a non-volatile memory (English: non-volatile memory), for example, a flash memory (English: flash memory), a hard disk drive (hard disk drive, HDD), or a solid-state drive (solid-state drive, SSD). The memory 630 may further include a combination of the foregoing types of memories. When the device 600 corresponds to the signal processing apparatus 400, for example, the memory 630 may store a to-be-sent signal. When the device 600 corresponds to the signal processing apparatus 500 shown in FIG. 5, for example, the memory 630 may store a received PAM8 symbol.

Optionally, the memory 630 stores an operating system and a program, an executable module, or a data structure, a subset thereof, or an extended set thereof. The program may include various operation instructions for implementing various operations. The operating system may include various system programs, to implement various basic services and process a hardwarebased task. The processor 610 may read a program in the memory 630, to implement a signal processing method provided in this embodiment of this application.

The bus system 640 may be a peripheral component interconnect (peripheral component interconnect, PCI) bus, an extended industry standard architecture (extended industry standard architecture, EISA) bus, or the like. The bus system 640 may be classified into an address bus, a data bus, a control bus, or the like. For ease of representation, only one thick line represents the bus in FIG. 6, but this does not mean that there is only one bus or only one type of bus.

An embodiment of this application further provides a computer-readable storage medium, including instructions or a computer program. When the instructions or the computer program is run on a computer, the computer is enabled to perform the signal processing method provided in the foregoing embodiment.

An embodiment of this application further provides a computer program product including instructions and a computer program. When the computer program product runs on a computer, the computer is enabled to perform the signal processing method in the foregoing embodiment.

An embodiment of this application further provides a system. The system includes a transmit end and a receive end that perform the signal processing method in the foregoing method embodiment.

In the specification, the claims, and the accompanying drawings of this application, the terms "first", "second", "third", "fourth", and the like (if existent) are intended to distinguish between similar objects but do not necessarily indicate a specific order or sequence. It should be understood that data termed in such a way are interchangeable in appropriate circumstances so that embodiments described herein can be implemented in other orders than the order illustrated or described herein. In addition, the terms "include" and "have" and any other variants are intended to cover a non-exclusive inclusion. For example, a process, a method, a system, a product, or a device that includes a list of steps or units is not necessarily limited to those expressly listed steps or units, but may include other steps or units not expressly listed or inherent to such a process, method, product, or device.

It may be clearly understood by persons skilled in the field that, for the purpose of convenient and brief description, for a detailed working process of the foregoing system, apparatus, and unit, refer to a corresponding process in the foregoing method embodiment, and details are not described herein again.

In the several embodiments provided in this application, it should be understood that the disclosed system, apparatus, and method may be implemented in other manners. For example, the described apparatus embodiments are merely examples. For example, division into the units is merely logical service division. During actual implementation, there may be another division manner. For example, a plurality of units or components may be combined or integrated into another system, or some features may be ignored or not performed. In addition, displayed or discussed mutual couplings or direct couplings or communication connections may be implemented through some interfaces. Indirect couplings or communication connections between the apparatuses or the units may be implemented in electrical, mechanical, or other forms.

The units described as separate parts may or may not be physically separate, and parts displayed as units may or may not be physical units, in other words, may be located at one position, or may be distributed on a plurality of network units. Some or all of the units may be selected based on actual requirements to achieve the objectives of the solutions of embodiments.

In addition, service units in embodiments of this application may be integrated into one processing unit, or each unit may exist alone physically, or two or more units may be integrated into one unit. The integrated unit may be implemented in a form of hardware, or may be implemented in a form of a software service unit.

When the integrated unit is implemented in the form of the software service unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the method described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

Persons skilled in the art should be aware that in the foregoing one or more examples, services described in the present invention may be implemented by hardware, software, firmware, or any combination thereof.

When implemented by software, these services may be stored in a computer-readable medium or transmitted as one or more instructions or code on the computer-readable medium. The computer-readable medium includes a computer storage medium and a communications medium. The communication medium includes any medium that enables a computer program to be transmitted from one place to another. The storage medium may be any available medium accessible to a general-purpose or a dedicated computer.

The objectives, the technical solutions, and the beneficial effects of the present invention are further described in detail in the foregoing specific implementations. It should be understood that the foregoing descriptions are merely specific implementations of the present invention.

The foregoing embodiments are merely used to describe the technical solutions of this application, but not to limit the technical solutions. Although this application is described in detail with reference to the foregoing embodiments, persons of ordinary skill in the art should understand that they may still make modifications to the technical solutions described in the foregoing embodiments or make equivalent replacements to some technical features thereof, and such modifications or replacements do not cause the essence of corresponding technical solutions to depart from the scope of the technical solutions of embodiments of this application.

**Claims**

1. A signal processing method, applied to a transmit end, wherein the method comprises:

   obtaining a low-density parity-check LDPC encoded signal based on a to-be-sent signal;
   modulating the LDPC encoded signal into an 8 pulse amplitude modulation PAM8 symbol; and
   sending the PAM8 symbol to a receive end through a network cable.

2. The method according to claim 1, wherein the LDPC encoded signal comprises 2048 bits, the LDPC encoded signal is obtained by performing LDPC encoding on data of 1723 bits, the 1723 bits comprise 1 synchronization bit, 25 blocks, and 97 bits whose values are 0, and one of the blocks comprises 65 bits.

3. The method according to claim 2, wherein the modulating the LDPC encoded signal into an 8 pulse amplitude modulation PAM8 symbol comprises:

   removing the 97 bits whose values are 0 from the LDPC encoded signal, to obtain 1951 bits;
   removing M bits from the 1951 bits, to obtain 1951-M bits, wherein the 1951-M bits are used to carry the to-be-sent signal; and

   modulating the 1951-M bits into the PAM8 symbol.

4. The method according to claim 3, wherein the removing M bits from the 1951 bits comprises:
   removing 1 bit at an interval of N bits starting from a $0^{th}$ bit in the 1951 bits, until the M bits are removed.

5. The method according to claim 4, wherein a baud rate of the to-be-sent signal is 500 MBd M, and a value of M is 31.

6. The method according to claim 4 or 5, wherein a value of N is 32.

7. The method according to any one of claims 1 to 6, wherein the network cable is a Category 5 enhanced unshielded twisted pair.

8. A signal processing method, applied to a receive end, wherein the method comprises:

   receiving an 8 pulse amplitude modulation PAM8 symbol through a network cable;
   demodulating the PAM8 symbol to obtain a low-density parity-check LDPC encoded signal; and
   decoding the LDPC encoded signal to obtain a decoded signal.

9. The method according to claim 8, wherein the PAM8 symbol is the PAM8 symbol according to any one of claims 3 to 6, and the demodulating the PAM8 symbol to obtain a low-density parity-check LDPC encoded signal comprises:

   converting the PAM8 symbol into a signal comprising 1951-M bits;
   inserting M bits into the 1951-M bits to obtain 1951 bits, wherein values of the M bits are all 0; and
   adding 97 bits whose values are 0 to the 1951 bits, to obtain an LDPC encoded signal comprising 2048 bits.

10. The method according to claim 8 or 9, wherein the decoding the LDPC encoded signal to obtain a decoded signal comprises:

    obtaining a log-likelihood ratio LLR of the LDPC encoded signal based on the LDPC encoded signal, wherein each bit in the LDPC encoded signal corresponds to one LLR; and
    decoding the LLRs of the LDPC encoded signal to obtain the decoded signal.

11. The method according to any one of claims 8 to 10, wherein the network cable is a Category 5 enhanced unshielded twisted pair.

12. A signal processing apparatus, used in a transmit end, wherein the apparatus comprises:

    a processing unit, configured to: obtain a low-density parity-check LDPC encoded signal based on a to-be-sent signal, and modulate the LDPC encoded signal into an 8 pulse amplitude modulation PAM8 symbol; and
    a sending unit, configured to send the PAM8 symbol to a receive end through a network cable.

13. The apparatus according to claim 12, wherein the LDPC encoded signal comprises 2048 bits, the LDPC encoded signal is obtained by performing LDPC encoding on data of 1723 bits, the 1723 bits comprise 1 synchronization bit, 25 blocks, and 97 bits whose values are 0, and one of the blocks comprises 65 bits.

14. The apparatus according to claim 13, wherein the modulating the LDPC encoded signal into an 8 pulse amplitude modulation PAM8 symbol comprises:

    removing the 97 bits whose values are 0 from the LDPC encoded signal, to obtain 1951 bits;
    removing M bits from the 1951 bits, to obtain 1951-M bits, wherein the 1951-M bits are used to carry the to-be-sent signal; and
    modulating the 1951-M bits into the PAM8 symbol.

15. The apparatus according to claim 14, wherein the removing M bits from the 1951 bits comprises:
    removing 1 bit at an interval of N bits starting from a $0^{th}$ bit in the 1951 bits, until the M bits are removed.

16. The apparatus according to claim 15, wherein a baud rate of the to-be-sent signal is 500 MBd M, and a value of M is 31.

17. The apparatus according to claim 15 or 16, wherein a value of N is 32.

18. The apparatus according to any one of claims 12 to 17, wherein the network cable is a Category 5 enhanced unshielded twisted pair.

19. A signal processing apparatus, used in a receive end, wherein the apparatus comprises:

    a receiving unit, configured to receive an 8 pulse amplitude modulation PAM8 symbol through a network cable; and
    a processing unit, configured to: demodulate the PAM8 symbol to obtain a low-density parity-check LDPC encoded signal; and decode the LDPC encoded signal to obtain a decoded signal.

20. The apparatus according to claim 19, wherein the PAM8 symbol is the PAM8 symbol according to any one of claims 3 to 6, and the demodulating the PAM8 symbol to obtain a low-density parity-check LDPC encoded signal comprises:

    converting the PAM8 symbol into a signal comprising 1951-M bits;
    inserting M bits into the 1951-M bits to obtain 1951 bits, wherein values of the M bits are all 0; and
    adding 97 bits whose values are 0 to the 1951 bits, to obtain an LDPC encoded signal comprising 2048 bits.

21. The apparatus according to claim 19 or 20, wherein the decoding the LDPC encoded signal to obtain a decoded signal comprises:

    obtaining a log-likelihood ratio LLR of the LDPC encoded signal based on the LDPC encoded signal, wherein each bit in the LDPC encoded signal corresponds to one LLR; and
    decoding the LLRs of the LDPC encoded signal to obtain the decoded signal.

22. The apparatus according to any one of claims 19 to 21, wherein the network cable is a Category 5 enhanced unshielded twisted pair.

23. A device, comprising a processor and a memory, wherein

    the memory is configured to store instructions or a computer program; and
    the processor is configured to execute the instructions or the computer program, to perform the method according to any one of claims 1 to 11.

24. A computer-readable storage medium, comprising instructions or a computer program, wherein when the instructions or the computer program is run on a computer, the computer is enabled to perform the method according to any one of claims 1 to 11.

25. A system, comprising:
    a transmit end that performs the method according to any one of claims 1 to 7 and a receive end that performs the method according to any one of the methods 8 to 11.

26. A computer program product, comprising a computer program, wherein when the computer program is run on a processor, the method according to any one of claims 1 to 11 is implemented.

FIG. 1

| Transmit end | | Receive end |
|---|---|---|

S101: Obtain an LDPC encoded signal based on a to-be-sent signal

S102: Modulate the LDPC encoded signal into a PAM8 symbol

S103: Send the PAM8 symbol to the receive end through a network cable

S104: Receive the PAM8 symbol through the network cable

S105: Demodulate the PAM8 symbol to obtain the LDPC encoded signal

S106: Decode the LDPC encoded signal obtained through demodulation, to obtain a decoded signal

FIG. 2

1 synchronization
bit

| | 65B block 1 | 65B block 2 | ... | 65B block 25 | 97 bits 0 |

$\longleftarrow$ 1+65*25+97=1723 bits $\longrightarrow$

LDPC (1723, 2048) encoding

First deleted bit

Remove the 97 bits 0

Last deleted bit

0, 1, 31, **32**, 33, 34, ..., 63, **64**, 65, 66, ..., 95, **96**, 97, 98, ..., 959, **960**, 961, ..., 991, **992**, 993, 994, ..., 1023, 1024, 1025, ..., 1950

Modulate 1920 bits into
640 PAM8 symbols

| | | | | | | | |
|---|---|---|---|---|---|---|---|
| Network cable 1 | PAM8 (0) | PAM8 (4) | PAM8 (8) | PAM8 (12) | ... | PAM8 (632) | PAM8 (636) |
| Network cable 2 | PAM8 (1) | PAM8 (5) | PAM8 (9) | PAM8 (13) | ... | PAM8 (633) | PAM8 (637) |
| Network cable 3 | PAM8 (2) | PAM8 (6) | PAM8 (10) | PAM8 (14) | ... | PAM8 (634) | PAM8 (638) |
| Network cable 4 | PAM8 (3) | PAM8 (7) | PAM8 (11) | PAM8 (15) | ... | PAM8 (635) | PAM8 (639) |

FIG. 3

EP 4 498 621 A1

14

400

Signal processing apparatus

401

Processing unit

402

Sending unit

FIG. 4

500

Signal processing apparatus

501

Receiving unit

502

Processing unit

FIG. 5

FIG. 6

## INTERNATIONAL SEARCH REPORT

| International application No. |
|---|
| **PCT/CN2023/089502** |

**A. CLASSIFICATION OF SUBJECT MATTER**

H04L1/00(2006.01)i

According to International Patent Classification (IPC) or to both national classification and IPC

**B. FIELDS SEARCHED**

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

CNTXT, VEN, WPABS, ENTXT, VCN, CNKI, IEEE: 低密度奇偶校验码, 脉冲幅度调制, 网线, 超五类, 非屏蔽双绞线, 编码, 解码, 调制, 解调, 对数似然比, PAM, PAM8, LDPC, encode, decode, modulate, demodulate, LLR

**C. DOCUMENTS CONSIDERED TO BE RELEVANT**

| Category* | Citation of document, with indication, where appropriate, of the relevant passages | Relevant to claim No. |
|---|---|---|
| X | US 9001872 B1 (AQUANTIA CORPORATION) 07 April 2015 (2015-04-07) claims 23 and 39, and description, column 1, line 20 to column 2, line 39, and column 4, line 33 to column 7, line 8 | 1-26 |
| X | CN 102142932 A (BROADCOM CORP.) 03 August 2011 (2011-08-03) description, paragraphs [0095]-[0143] | 1-26 |
| X | CN 113196661 A (HUAWEI TECHNOLOGIES CO., LTD.) 30 July 2021 (2021-07-30) description, paragraphs [0226]-[0328] | 1-26 |
| X | US 2015003510 A1 (BROADCOM CORPORATION) 01 January 2015 (2015-01-01) description, paragraphs [0029]-[0045] | 1-26 |
| X | MATSENKO, Svitlana et al. "LDPC Code with Fractal Decoder Device for 100 Gbps PAM-M Optical Interconnect" *2021 Photonics & Electromagnetics Research Symposium (PIERS),* 03 February 2022 (2022-02-03), pages 2382-2386 | 1-26 |
| A | CN 106160873 A (FUDAN UNIVERSITY) 23 November 2016 (2016-11-23) entire document | 1-26 |

☑ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 June 2023** | **21 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/089502**

**C.    DOCUMENTS CONSIDERED TO BE RELEVANT**

| Category* | Citation of document, with indication, where appropriate, of the relevant passages | Relevant to claim No. |
|---|---|---|
| A | US 2012260142 A1 (NEC LABORATORIES AMERICA, INC.) 11 October 2012 (2012-10-11)<br>    entire document | 1-26 |

Form PCT/ISA/210 (second sheet) (July 2022)

<div style="text-align:center">

**INTERNATIONAL SEARCH REPORT**
Information on patent family members

</div>

| International application No. |
| --- |
| **PCT/CN2023/089502** |

| Patent document cited in search report | | | Publication date (day/month/year) | Patent family member(s) | | | Publication date (day/month/year) |
| --- | --- | --- | --- | --- | --- | --- | --- |
| US | 9001872 | B1 | 07 April 2015 | None | | | |
| CN | 102142932 | A | 03 August 2011 | EP | 2362564 | A2 | 31 August 2011 |
| | | | | US | 2011191656 | A1 | 04 August 2011 |
| CN | 113196661 | A | 30 July 2021 | WO | 2022193101 | A1 | 22 September 2022 |
| US | 2015003510 | A1 | 01 January 2015 | None | | | |
| CN | 106160873 | A | 23 November 2016 | None | | | |
| US | 2012260142 | A1 | 11 October 2012 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210454781